# EUROPEAN PATENT SPECIFICATION

(11) **EP 4 336 600 B1**
(45) Date of publication and mention of the grant of the patent: **14.10.2026**
(21) Application number: 22941541.9
(22) Date of filing: 23.12.2022
(51) Int. Cl.: H01M 4/62, H01M 4/13, H01M 4/04, H01M 4/58, H01M 10/052, H01M 10/42, H01M 4/133, H01M 4/136, H01M 4/139, H01M 10/0525

(54) **POSITIVE ELECTRODE SLURRY, POSITIVE ELECTRODE PLATE AND LITHIUM BATTERY**
POSITIVELEKTRODENAUFSCHLÄMMUNG, POSITIVELEKTRODENPLATTE UND LITHIUMBATTERIE
SUSPENSION D'ÉLECTRODE POSITIVE, PLAQUE D'ÉLECTRODE POSITIVE ET BATTERIE AU LITHIUM

(30) Priority: 11.05.2022 CN 202210512735
(43) Date of publication of application: 13.03.2024
(73) Proprietor: Hithium Tech HK Limited, Hong Kong (HK)
(72) Inventor: QU, Renjie, Xiamen, Fujian 361100 (CN)
(74) Representative: Habermann, Hruschka & Schnabel
(86) International application number: PCT/CN2022/141259
(87) International publication number: WO 2023/216608

(56) References cited:
- WO-A1-2011/002014
- CN-A- 106 684 381
- CN-A- 108 933 260
- CN-A- 112 259 913
- CN-A- 113 140 720
- CN-A- 114 899 400
- JP-A- 2014 116 265
- JP-A- 2014 165 108
- US-A1- 2012 095 131

## Description

### CROSS-REFERENCE TO RELATED APPLICATIONS

This application claims priority to Chinese Patent Application No. 202210512735.7 filed before the China National Intellectual Property Administration on May 11, 2022 and entitled "POSITIVE ELECTRODE SLURRY, POSITIVE ELECTRODE SHEET, AND LITHIUM BATTERY".

### FIELD

The present disclosure belongs to the field of batteries, and specifically relates to a positive electrode slurry, a positive electrode sheet, and a lithium battery.

### BACKGROUND

The positive electrode materials of traditional lithium-ion battery usually adopt polyvinylidene fluoride as a binder, which needs to be dissolved in an organic solvent before being coated on a current collector. The organic solvent is not only costly, but during a coating process, it is also accompanied by volatilization. Therefore, this will not only affect the health of workers, but also cause environmental pollution. Usually, in order to solve the problem of environmental pollution and reduce costs, enterprises usually set up their own organic solvent recovery towers in battery factories. Although the cost will be reduced to a certain extent, with a development of the battery cell technology, the cost is still not ideal.

In recent years, more and more researchers are trying to replace the oil-based system of the lithium-ion battery positive electrode with an aqueous system. Aqueous binders are commonly used, but a homogenization of an aqueous positive electrode system with a singlecomponent positive electrode aqueous binder is difficult. Usually gel will be formed within 10 minutes after homogenization, making it difficult to carry out the coating process. Moreover, the coated electrode sheet is brittle and hard, and has a low cold-pressed density. A winding of the coated electrode sheet is difficult, and the rolled battery core is prone to break when folded inward, which affects mechanical properties of the electrode sheet, and then affects electrochemical performance of the lithium-ion battery.

Therefore, existing positive electrode slurry needs to be improved.

JP 2014-116265 A discloses a binder composition for a lithium-ion secondary battery electrode. The binder composition includes: polymer particles (A) containing a (meth)acrylate compound and polyfunctional thiol compound, and produced by polymerizing a monomer composition (a) having 0.001 pts.wt to 10 pts.wt of content of polyfunctional thiol compound with respect to (meth)acrylate compound of 100 pts.wt, in aqueous medium; and a solvent.

US 2012/095131 A1 discloses s a binder composition for a non-aqueous secondary battery electrode, which comprises functional group-containing crosslinked resin microparticles produced by polymerizing certain components.

WO 2011/002014 A1 discloses a positive electrode for secondary batteries, which comprises a current collector and an electrode active material layer laminated on the current collector and containing a positive electrode active material and a binder.

CN 106684381 A discloses an aqueous positive paste, which comprises the following constituents based on parts by mass: 85-95 parts of nanometer lithium iron phosphate, 3-45 parts of aqueous adhesive, 1-6 parts of composite conductive agent, 0.1-1 part of dispersing agent, 0.5-5 parts of plasticizer and 55-85 parts of deionized water.

### SUMMARY

The present disclosure aims to solve, at least to a certain extent, one of the technical problems in the related art. To this end, one object of the present disclosure is to provide a positive electrode slurry, a positive electrode sheet, and a lithium battery. In the process of mixing the positive electrode slurry, a functional additive is strongly adsorbed on a surface of a positive electrode active material particles through interactions such as ionic bonds, covalent bonds, or hydrogen bonds. That is, a coating layer is formed on the surface of the positive electrode active material particles. The coating layer inhibits a strong force between an aqueous binder and the positive electrode active material particles, thus effectively improving the problem that gel is prone to generate during the homogenization process of the slurry.

In one aspect of the present disclosure, the present disclosure provides a positive electrode slurry. According to an embodiment of the present disclosure, the positive electrode slurry includes a positive electrode active material, a conductive agent, an aqueous binder, and a functional additive, wherein the functional additive is diethylenetriamine; a mass ratio of the aqueous binder to the functional additive is 1: 0.07; the aqueous binder is formed by copolymerizing butyl acrylate, acrylonitrile, and acrylamide, or the aqueous binder is polymethyl acrylate or polymethacrylic acid; the functional additive has a molecular weight of 18000 to 25000; and a mass ratio of the positive electrode active material, the conductive agent to a sum of the aqueous binder and the functional additive is (94~98):(0.5~6):(2~5).

Therefore, by adding the aqueous binder and the functional additive to the positive electrode slurry, in the process of mixing the positive electrode slurry, these functional additives are strongly adsorbed on the surface of the positive electrode active material particles through interactions such as ionic bonds, covalent bonds, or hydrogen bonds. That is, a coating layer is formed on the surface of the positive electrode active material particles. The coating layer inhibits a strong force between the aqueous binder and the positive electrode active material particles, thus effectively improving the problem that gel is prone to generate during the homogenization process of the slurry. At the same time, the above-mentioned positive electrode slurry, which includes the aqueous binder and the functional additive mixed with the positive electrode active particles and the conductive agent, is coated on the surface of the positive electrode current collector to form a positive electrode sheet. Due to the special functional group structure in the functional additive, a dispersion ability between the positive electrode active material particles and the binder is increased. At the same time, the functional addictive can self-repair the voids caused by solvent evaporation due to its low molecular weight, reducing a shrinkage stress when the slurry is dried, and allowing the positive electrode sheet to have flexibility and toughness while maintaining excellent bonding performance. Therefore, the mechanical properties of the electrode sheet can be improved, the problems such as floating powder and winding fragments that are easily generated when the electrode sheet is cut can be avoided, and the electrical performance of the lithium-ion battery can be ensured. In addition, the positive electrode slurry of the present disclosure uses water as a solvent, which effectively reduces environmental pollution and eliminates potential health risks for workers.

In addition, the positive electrode slurry according to the above embodiments of the present disclosure may further have the following additional technical features:

In some embodiments of the present disclosure, the positive electrode active material includes at least one of lithium nickelate, lithium manganate, lithium cobaltate, lithium manganese iron phosphate, lithium vanadium phosphate, lithium iron phosphate, nickel cobalt aluminum lithium oxide, and nickel cobalt manganese lithium oxide.

In some embodiments of the present disclosure, the conductive agent includes at least one of acetylene black, Super P, carbon nanotubes, graphene, and conductive carbon fiber.

In a second aspect of the present disclosure, the present disclosure provides a positive electrode sheet. According to an embodiment of the present disclosure, the positive electrode sheet includes: a positive electrode current collector; a positive electrode active substance layer, the positive electrode active substance layer being formed on a surface of the positive electrode current collector, and the positive electrode active substance layer being formed by using the above-mentioned positive electrode slurry.

Therefore, the above-mentioned positive electrode slurry, which includes the aqueous binder, the functional additive, the positive electrode active particles, and the conductive agent, is coated on the surface of the positive electrode current collector to form a positive electrode sheet. Due to the special functional group structure in the functional additive, a dispersion ability between the positive electrode active material particles and the binder is increased. At the same time, the functional addictive can self-repair the voids caused by solvent evaporation due to its low molecular weight, reducing a shrinkage stress when the slurry is dried, and allowing the positive electrode sheet to have flexibility and toughness while maintaining excellent bonding performance. Therefore, the mechanical properties of the electrode sheet can be improved, the problems such as floating powder and winding fragments that are easily generated when the electrode sheet is cut can be avoided, and the electrical performance of the lithium-ion battery can be ensured. In addition, the positive electrode slurry of the present disclosure uses water as a solvent, which effectively reduces environmental pollution and eliminates potential health risks for workers.

In a third aspect of the present disclosure, the present disclosure provides a lithium battery. According to an embodiment of the present disclosure, the lithium battery includes the above-mentioned positive electrode sheet. Therefore, the lithium battery has a low internal resistance and excellent cycle performance.

Additional aspects and advantages of the present disclosure will be provided at least in part in the following description, or will become apparent at least in part from the following description, or can be learned from the practice of the present disclosure.

### DETAILED DESCRIPTION

Embodiments of the present disclosure are described in detail below, which are intended to explain the present disclosure and are not to be construed as to limit the present disclosure.

In one aspect of the present disclosure, the present disclosure provides a positive electrode slurry. According to an embodiment of the present disclosure, the positive electrode slurry includes a positive electrode active material, a conductive agent, an aqueous binder, and a functional additive, wherein the functional additive is diethylenetriamine; a mass ratio of the aqueous binder to the functional additive is 1: 0.07; the aqueous binder is formed by copolymerizing butyl acrylate, acrylonitrile, and acrylamide, or the aqueous binder is polymethyl acrylate or polymethacrylic acid; the functional additive has a molecular weight of 18000 to 25000; and a mass ratio of the positive electrode active material, the conductive agent to a sum of the aqueous binder and the functional additive is (94~98):(0.5~6):(2~5).

The inventors found that by adding the aqueous binder and the functional additive to the positive electrode slurry, in the process of mixing the positive electrode slurry, these functional additives are strongly adsorbed on the surface of the positive electrode active material particles through interactions such as ionic bonds, covalent bonds, or hydrogen bonds. That is, a coating layer is formed on the surface of the positive electrode active material particles. The coating layer inhibits a strong force between the aqueous binder and the positive electrode active material particles, thus effectively improving the problem that gel is prone to generate during the homogenization process of the slurry. At the same time, the above-mentioned positive electrode slurry, which includes the aqueous binder and the functional additives mixed with the positive electrode active particles and the conductive agent, is coated on the surface of the positive electrode current collector to form a positive electrode sheet. Due to the special functional group structure in the functional additive, a dispersion ability between the positive electrode active material particles and the binder is increased. At the same time, the functional addictive can self-repair the voids caused by solvent evaporation due to its low molecular weight, reducing a shrinkage stress when the slurry is dried, and allowing the positive electrode sheet to have softness and toughness while maintaining excellent bonding performance. Therefore, the mechanical properties of the electrode sheet can be improved, the problems such as floating powder and winding fragments that are easily generated when the electrode sheet is s cut can be avoided, and the electrical performance of the lithium-ion battery can be ensured. In addition, the positive electrode slurry of the present disclosure uses water as a solvent, which effectively reduces environmental pollution and eliminates potential health risks for workers.

According to an embodiment of the present disclosure, a mass ratio of the aqueous binder to the functional additive in the above-mentioned positive electrode slurry is 1: 0.07. The inventors found that if the amount of the aqueous binder added is too high, the gel of the slurry will not be improved significantly; if the amount of the aqueous binder added is too low, the stability of the slurry will be affected; if the amount of the functional additive added is too high, the bonding force of the electrode sheet will be lost; and if the amount of the functional additive added is too low, the gel improvement and the toughness improvement of the electrode sheet will be insufficient. Therefore, the combination the aqueous binder and the functional additive according to the above-mentioned ratio can improve the stability of the positive electrode slurry while improving the gel of the slurry and the toughness of the electrode sheet. Further, the aqueous binder is formed by copolymerizing butyl acrylate, acrylonitrile, and acrylamide, or the aqueous binder is polymethyl acrylate or polymethacrylic acid. The inventors found that the aqueous binder obtained by this combination can allow the electrode sheet to have high bonding force while further improving the flexibility of the electrode sheet with the increase of the amount of soft monomers added. Meanwhile, a molar ratio of butyl acrylate, acrylonitrile to acrylamide in the copolymerized aqueous binder is (40~60):(20~40):(10~30).

According to an embodiment of the present disclosure, the functional additive above has a molecular weight of 18000 to 25000. The inventors found that if the molecular weight of the functional additive is too high, the solvent voids cannot be effectively filled when the electrode sheet is dried, and the electrode sheet is prone to shrinking itself, resulting in warping or cracking of the electrode sheet; and if the molecular weight of the functional additive is too low, the functional additive may be taken away with the evaporation of the solvent, and cannot play a role of toughening. Therefore, by adopting functional additive in the above molecular weight range, the electrode sheet may be toughened while avoiding warping or cracking of the electrode sheet. Further, the above-mentioned functional additive includes but are not limited to at least one of polyamine, polyvinylpyrrolidone, and polyether.

According to an embodiment of the present disclosure, a mass ratio of the positive electrode active material, the conductive agent to a sum of the aqueous binder and the functional additive in the above-mentioned positive electrode slurry is (94~98):(0.5~6):(2~5). Further, the average particle size D50 of the positive electrode active material ranges from 0.2µm~1.5µm. In addition, the positive electrode active material includes but is not limited to at least one of lithium nickelate, lithium manganate, lithium cobaltate, lithium manganese phosphate, lithium vanadium phosphate, lithium iron phosphate, nickel cobalt aluminum lithium oxide, and nickel cobalt manganese lithium oxide; and the conductive agent includes but is not limited to at least one of acetylene black, Super P, carbon nanotubes, graphene, and conductive carbon fiber.

In a second aspect of the present disclosure, the present disclosure provides a positive electrode sheet. According to an embodiment of the present disclosure, the positive electrode sheet includes a positive electrode current collector and a positive electrode active substance layer. The positive electrode active substance layer is formed on the surface of the positive electrode current collector, and the positive electrode active substance layer is formed by using the above-mentioned positive electrode slurry. The inventors found that by coating the above-mentioned positive electrode slurry, which includes the aqueous binder, the functional additives, the positive electrode active particles, and the conductive agent, on the surface of the positive electrode current collector to form a positive electrode sheet, due to the special functional group structure in the functional additive, a dispersion ability between the positive electrode active material particles and the binder is increased. At the same time, the functional addictive can self-repair the voids caused by solvent evaporation due to its low molecular weight, reducing a shrinkage stress when the slurry is dried, and allowing the positive electrode sheet to have flexibility and toughness while maintaining excellent bonding performance. Therefore, the mechanical properties of the electrode sheet can be improved, the problems such as floating powder and winding fragments that are easily generated when the electrode sheet is slit can be avoided, and the electrical performance of the lithium-ion battery can be ensured. In addition, the positive electrode slurry of the present disclosure uses water as a solvent, which effectively reduces environmental pollution and eliminates potential health risks for workers.

It may be noted that the features and advantages described above for the positive electrode slurry are equally applicable to the positive electrode sheet, and will not be described again herein.

In a third aspect of the present disclosure, the present disclosure provides a lithium battery. According to an embodiment of the present disclosure, the lithium battery includes the above-mentioned positive electrode sheet. Therefore, the lithium battery has a low internal resistance and excellent cycle performance.

It may be noted that the features and advantages described above for the positive electrode sheet are equally applicable to the lithium battery, and will not be described again herein.

Examples of the present disclosure are described in detail below. It may be noted that the examples described below are exemplary and are only used to explain the present disclosure and cannot be understood as limiting the present disclosure. In addition, if not explicitly stated, all reagents used in the following examples are commercially available or can be synthesized according to the methods herein or known, and for reaction conditions not listed, they are also readily available to those skilled in the art.

### Example 1, for reference only not part of the invention

The positive electrode slurry included: 96.5wt% lithium iron phosphate, 2.5wt% binder, and 1wt% acetylene black. Wherein the average particle size D50 of the lithium iron phosphate is 1.2µm, and the binder included an aqueous binder polyacrylic acid and a functional additive polyvinylpyrrolidone. A mass ratio of polyacrylic acid to functional additive polyvinylpyrrolidone was 1:0.07, and a molecular weight distribution width of polyvinylpyrrolidone was 12000~15000.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 2, for reference only not part of the invention

The positive electrode slurry included: 96.5wt% lithium iron phosphate, 2.5wt% binder, and 1wt% acetylene black. Wherein the average particle size D50 of the lithium iron phosphate is 1.2µm, and the binder included an aqueous binder polyacrylic acid and a functional additive polyvinylpyrrolidone. A mass ratio of polyacrylic acid to functional additive polyvinylpyrrolidone was 1:0.07, and a molecular weight distribution width of polyvinylpyrrolidone was 20000~30000.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 3, for reference only not part of the invention

The positive electrode slurry included: 96.5wt% lithium iron phosphate, 2.5wt% binder, and 1wt% acetylene black. Wherein the average particle size D50 of the lithium iron phosphate is 1.2µm, and the binder included an aqueous binder polyacrylic acid and a functional additive polyvinylpyrrolidone. A mass ratio of polyacrylic acid to functional additive polyvinylpyrrolidone was 1:0.1, and a molecular weight distribution width of polyvinylpyrrolidone was 12000~15000.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 4, for reference only not part of the invention

The positive electrode slurry included: 96.8wt% lithium iron phosphate, 2wt% binder, and 1.2wt% acetylene black. Wherein the average particle size D50 of the lithium iron phosphate is 0.8µm, and the binder included an aqueous binder (formed by copolymerizing butyl acrylate, acrylonitrile, and acrylamide) and a functional additive sodium lauroyl glutamate. A mass ratio of the aqueous binder to the functional additive is 1:0.07.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 5, for reference only not part of the invention

The positive electrode slurry included: 96.8wt% lithium iron phosphate, 2wt% binder, and 1.2wt% acetylene black. Wherein the average particle size D50 of the lithium iron phosphate is 0.8µm, and the binder included an aqueous binder (formed by copolymerizing butyl acrylate, acrylonitrile, and acrylamide) and a functional additive sodium alkyl benzene sulfonate. A mass ratio of the aqueous binder to the functional additive is 1:0.07.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 6, for reference only not part of the invention

The positive electrode slurry included: 95.5wt% lithium iron phosphate, 2.8wt% binder, and 1.7wt% acetylene black. Wherein the average particle size D50 of the lithium iron phosphate is 0.8µm, and the binder included an aqueous binder (formed by copolymerizing butyl acrylate, acrylonitrile, and acrylamide) and a functional additive isomeric alcohol phosphate. A mass ratio of the aqueous binder to the functional additive is 1:0.07.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 7, for reference only not part of the invention

The positive electrode slurry included: 95.5wt% lithium iron phosphate, 2.8wt% binder, and 1.7wt% acetylene black. Wherein the average particle size D50 of the lithium iron phosphate is 0.8µm, and the binder included an aqueous binder (formed by copolymerizing butyl acrylate, acrylonitrile, and acrylamide) and a functional additive polyether. A mass ratio of the aqueous binder to the functional additive is 1:0.07, and a molecular weight distribution width of the functional additive was 18000~25000.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 8

The positive electrode slurry included: 95.5wt% lithium iron phosphate, 2.8wt% binder, and 1.7wt% acetylene black. Wherein the average particle size D50 of the lithium iron phosphate is 0.8µm, and the binder included an aqueous binder (formed by copolymerizing butyl acrylate, acrylonitrile, and acrylamide) and a functional additive diethylenetriamine. A mass ratio of the aqueous binder to the functional additive is 1:0.07, and a molecular weight distribution width of the functional additive was 18000~25000.

Preparation method of the positive electrode sheet: the above-mentioned positive electrode slurry was coated on both surfaces of the aluminum foil, and the aluminum foil was cold-pressed after the coating was completed, then the positive electrode active substance layer could be formed on the surface of the aluminum foil (a thickness of the double-sided coating was 240µm).

Preparation of battery cell: the battery cell was assembled with the above-mentioned positive electrode sheet as the positive electrode, graphite as the negative electrode, PP film as the separator, and commercial common lithium iron phosphate electrolyte as the electrolyte.

### Example 9

The positive electrode active material was lithium cobaltate, the conductive agent was graphene, the aqueous binder was polymethyl acrylate, and the rest was the same as in Example 8.

### Example 10

The positive electrode active material was nickel cobalt manganese lithium oxide, the conductive agent was carbon nanotubes, the aqueous binder was polymethacrylic acid, and the rest was the same as in Example 8.

### Example 11, for reference only not part of the invention

The aqueous binder was polyacrylamide, and the rest was the same as in Example 8.

### Example 12, for reference only not part of the invention

The aqueous binder was formed by copolymerizing acrylic acid and acrylonitrile, and the rest was the same as in Example 8.

### Example 13, for reference only not part of the invention

The aqueous binder was formed by copolymerizing methyl acrylate and acrylamide, the rest was the same as in Example 8.

### Comparative Example 1

The positive electrode slurry included: 96.5wt% lithium iron phosphate, 2.5wt% binder polyacrylic acid, and 1wt% acetylene black. Wherein the average particle size D50 of the lithium iron phosphate is 1.2µm, and the rest was the same as in Example 1.

### Comparative Example 2

The positive electrode slurry included: 96.5wt% lithium iron phosphate, 2.5wt% binder (formed by copolymerizing butyl acrylate, acrylonitrile, and acrylamide), and 1wt% acetylene black. Wherein the average particle size D50 of the lithium iron phosphate is 1.2µm, and the rest was the same as in Example 1.

The state of the positive electrode slurry, the flexibility of the positive electrode sheet, the peeling force of the positive electrode sheet, and the DCR performance of the battery cell obtained in Examples 1-13 and Comparative Examples 1-2 were evaluated. The evaluation results are shown in Table 1.

**Table 1. The state of the positive electrode slurry, the flexibility of the positive electrode sheet, the peeling force of the positive electrode sheet, and the Direct Current Rsistance (DCR) performance of the battery cell obtained in Examples 1-13 and Comparative Examples 1-2**

| | The state of the positive electrode slurry | The flexibility of the positive electrode sheet | The peeling force of the positive electrode sheet (N/m) | Battery cell DCR (50%SOS) |
|---|---|---|---|---|
| Example 1 | No gel was found after mixing for 2 hours | No obvious material loss was found in winding | 8.6 | 18.4 |
| Example 2 | No gel was found after mixing for 4 hours | No obvious material loss was found in winding | 10.4 | 17.8 |
| Example 3 | No gel was found after mixing for 2 hours | No obvious material loss was found in winding | 9.2 | 18.6 |
| Example 4 | No gel was found after mixing for 2 hours | Slight material loss when winding is folded inward | 8.6 | 18.2 |
| Example 5 | No gel was found after mixing for 2 hours | Slight material loss when winding is folded inward | 7.8 | 18.8 |
| Example 6 | No gel was found after mixing for 2 hours | Slight material loss in winding is folded inward | 8.3 | 18.6 |
| Example 7 | No gel was found after mixing for 4 hours | No obvious material loss was found in winding | 11.5 | 18.3 |
| Example 8 | No gel was found after mixing for 7 hours | No obvious material loss was found in winding, and the electrode sheet had good toughness | 18.2 | 16.2 |
| Example 9 | No gel was found after mixing for 10 hours | No obvious material loss was found in winding, and the electrode sheet had good toughness | 15.7 | 11.2 |
| Example 10 | No gel was found after mixing for 8 hours | No obvious material loss was found in winding, and the electrode sheet had good toughness | 15.2 | 9.1 |
| Example 11 | No gel was found after mixing for 3 hours | There was material loss in winding | 6.2 | 18.9 |
| Example 12 | No gel was found after mixing for 4 hours | There was material loss in winding | 5.8 | 18.2 |
| Example 13 | No gel was found after mixing for 3 hours | There was material loss in winding, and the electrode sheet was hard and brittle | 6.7 | 19.6 |
| Comparative Example 1 | Gel appeared at the time of discharging after mixing | Large area of material loss at the crease when electrode sheet was folded in half | 4.3 | 22.1 |
| Comparative Example 2 | No gel was found after mixing for 30 minutes | Material loss at the crease when electrode sheet was folded in half twice | 5.1 | 21.3 |

In the description of this specification, the description of the reference terms such as "an embodiment", "some embodiments", "example", "specific example", or "some examples" means that the specific features, structures, materials or characteristics described in conjunction with the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine and integrate different embodiments or examples and features of different embodiments or examples described in this specification unless they are contradictory with each other.

The embodiments of the present disclosure have been described above in conjunction with the accompanying drawings. However, the present disclosure is not limited to the above-mentioned specific embodiments. The above-mentioned specific embodiments are only exemplary and not restrictive. Many forms can be made by those skilled in the art inspired by the present disclosure without departing from the purpose of the present disclosure and the scope of the protection of the claims, and all of which fall within the protection of the present disclosure.

## Claims

1. A positive electrode slurry, comprising a positive electrode active material, a conductive agent, an aqueous binder, and a functional additive, **characterized in that**:
the functional additive is diethylenetriamine,
a mass ratio of the aqueous binder to the functional additive is 1: 0.07,
the aqueous binder is formed by copolymerizing butyl acrylate, acrylonitrile, and acrylamide, or the aqueous binder is polymethyl acrylate or polymethacrylic acid,
the functional additive has a molecular weight of 18000 to 25000, and
a mass ratio of the positive electrode active material, the conductive agent to a sum of the aqueous binder and the functional additive is (94~98):(0.5~6):(2~5).

2. The positive electrode slurry according to claim 1, wherein the positive electrode active material comprises at least one of lithium nickelate, lithium manganate, lithium cobaltate, lithium manganese iron phosphate, lithium vanadium phosphate, lithium iron phosphate, nickel cobalt aluminum lithium oxide, and nickel cobalt manganese lithium oxide.

3. The positive electrode slurry according to claim 1 or 2, wherein the conductive agent comprises at least one of acetylene black, Super P, carbon nanotubes, graphene, and conductive carbon fiber.

4. A positive electrode sheet, comprising:
a positive electrode current collector;
a positive electrode active substance layer, the positive electrode active substance layer being formed on a surface of the positive electrode current collector, and the positive electrode active substance layer being formed by using the positive electrode slurry according to any one of claims 1 to 3.

5. A lithium battery, comprising the positive electrode sheet according to claim 4.

## Patentansprüche

1. Positivelektrodenaufschlämmung, umfassend ein Positivelektrodenaktivmaterial, ein Leitmittel, ein wässriges Bindemittel und einen funktionellen Zusatzstoff, **dadurch gekennzeichnet, dass**
der funktionelle Zusatzstoff Diethylentriamin ist,
ein Massenverhältnis des wässrigen Bindemittels zu dem funktionellen Zusatzstoff 1: 0,07 beträgt,
das wässrige Bindemittel durch Copolymerisation von Butylacrylat, Acrylnitril und Acrylamid gebildet ist, oder das wässrige Bindemittel Polymethylacrylat oder Polymethacrylsäure ist,
der funktionelle Zusatzstoff ein Molekulargewicht von 18000 bis 25000 aufweist, und
ein Massenverhältnis des Positivelektrodenaktivmaterials zu dem Leitmittel zu der Summe aus dem wässrigen Bindemittel und dem funktionellen Zusatzstoff (94~98):(0,5~6):(2~5) beträgt.

2. Positivelektrodenaufschlämmung nach Anspruch 1, wobei das Positivelektrodenaktivmaterial mindestens eines von Lithiumnickelat, Lithiummanganat, Lithiumcobaltat, Lithium-Mangan-Eisen-Phosphat, Lithium-Vanadium-Phosphat, Lithium-Eisen-Phosphat, Lithium-Nickel-Kobalt-Aluminium-Oxid und Lithium-Nickel-Kobalt-Mangan-Oxid umfasst.

3. Positivelektrodenaufschlämmung nach Anspruch 1 oder 2, wobei das Leitmittel mindestens eines von Acetylenruß, Super P, Kohlenstoffnanoröhren, Graphen und leitfähigen Kohlenstofffasern umfasst.

4. Positivelektrodenplatte, umfassend:
einen Positivelektrodenstromkollektor;
eine Positivelektrodenaktivsubstanzschicht, wobei die Positivelektrodenaktivsubstanzschicht auf einer Oberfläche des Positivelektrodenstromkollektors gebildet ist und die Positivelektrodenaktivsubstanzschicht unter Verwendung der Positivelektrodenaufschlämmung nach einem der Ansprüche 1 bis 3 gebildet ist.

5. Lithiumbatterie, umfassend die Positivelektrodenplatte nach Anspruch 4.

## Revendications

1. Pâte d'électrode positive, comprenant un matériau actif d'électrode positive, un agent conducteur, un liant aqueux et un additif fonctionnel, **caractérisée en ce que** :
l'additif fonctionnel est la diéthylènetriamine,
un rapport massique entre le liant aqueux et l'additif fonctionnel est de 1 : 0,07,
le liant aqueux est formé par copolymérisation d'acrylate de butyle, d'acrylonitrile et d'acrylamide, ou le liant aqueux est du polyacrylate de méthyle ou de l'acide polyméthacrylique,
l'additif fonctionnel présente une masse moléculaire de 18 000 à 25 000, et
un rapport massique entre le matériau actif d'électrode positive, l'agent conducteur et une somme du liant aqueux et de l'additif fonctionnel est de (94~98):(0,5~6):(2~5).

2. Pâte d'électrode positive selon la revendication 1, dans laquelle le matériau actif d'électrode positive comprend au moins l'un parmi le nickelate de lithium, le manganate de lithium, le cobaltate de lithium, le phosphate de fer et de manganèse de lithium, le phosphate de vanadium de lithium, le phosphate de fer de lithium, l'oxyde de lithium, de nickel, de cobalt et d'aluminium et l'oxyde de lithium, de nickel, de cobalt et de manganèse.

3. Pâte d'électrode positive selon la revendication 1 ou 2, dans laquelle l'agent conducteur comprend au moins l'un parmi le noir d'acétylène, le Super P, les nanotubes de carbone, le graphène et les fibres de carbone conductrices.

4. Feuille d'électrode positive, comprenant :
un collecteur de courant d'électrode positive ;
une couche de substance active d'électrode positive, la couche de substance active d'électrode positive étant formée sur une surface du collecteur de courant d'électrode positive, et la couche de substance active d'électrode positive étant formée en utilisant la pâte d'électrode positive selon l'une quelconque des revendications 1 à 3.

5. Batterie au lithium, comprenant la feuille d'électrode positive selon la revendication 4.
